# EUROPÄISCHE PATENTSCHRIFT

(11) **EP 2 138 145 B1**
(45) Veröffentlichungstag und Bekanntmachung des Hinweises auf die Patenterteilung: **29.08.2012**
(21) Anmeldenummer: 09162229.0
(22) Anmeldetag: 09.06.2009
(51) Int. Cl.: A61G 13/06, F16P 1/00

(54) **Verkleidung einer höhenverstellbaren Stützsäule**
Cladding for a height-adjustable supporting column
Habillage d'une colonne d'appui réglable en hauteur

(30) Priorität: 25.06.2008 DE 202008008574 U
(43) Veröffentlichungstag der Anmeldung: 30.12.2009
(73) Patentinhaber: MAQUET GmbH & Co. KG, 76437 Rastatt (DE)
(72) Erfinder: Revenus, Rolf, 76133, Karlsruhe (DE)
(74) Vertreter: Schaumburg, Thoenes, Thurn, Landskron, Eckert

(56) Entgegenhaltungen:
- EP-A2- 1 245 213
- WO-A2-03/030802
- GB-A- 2 084 629
- GB-A- 2 309 984

## Beschreibung

Die Erfindung betrifft die Verkleidung einer höhenverstellbaren Stützsäule mit einer Mehrzahl von Verkleidungselementen, welche die Stützsäule ringförmig umgeben und teleskopförmig ineinandergreifend relativ zueinander in Achsrichtung der Stützsäule verschiebbar sind, wobei die Verkleidungselemente jeweils aus einem zu einem Ring gebogenen Materialband bestehen, dessen aneinandergrenzende Ränder jeweils einen rückwärts gebogenen Falz haben und durch eine im Profil C-förmige, die Falze umgreifende Verschlussklammer miteinander verbunden sind.

Die Dokumente EP 1245213, WO03030802 und GB2084629 offenbaren so eine Verkleidung für höhenverstellbare Stützsäulen.

Die Verkleidung ist insbesondere für eine Stützsäule eines Operationstisches bestimmt. Wenn die Verkleidung ausgetauscht werden muss oder ein Zugriff auf die Stützsäule für Wartung oder Reparatur erforderlich ist, müssen die ringförmigen Elemente der Verkleidung geöffnet werden. Hierzu muss die Verschlussklammer entfernt werden. Bei einer bisher bekannten Lösung haben die Falze nahe ihren Längsenden senkrecht zu ihrer Längsrichtung verlaufende Einschnitte, so dass die dadurch gebildeten Lappen nach dem Überschieben der Verschlussklammer hinter dieser in Richtung auf die Wand des Verkleidungselementes umgebogen werden können. Sowohl beim Andrücken des Lappens an die Wand des Verkleidungselementes als auch beim Wegbiegen desselben, um die Verschlussklammer wieder lösen zu können, besteht die Gefahr, dass das Verkleidungselement an seiner Außenseite beschädigt wird.

Der Erfindung liegt die Aufgabe zugrunde, bei einer Verkleidung der eingangs genannten Art den Verschluss so auszubilden, dass die Verschlussklammer einerseits in ihrer Verschlussstellung sicher verriegelt werden kann, andererseits aber auch ohne Beschädigung des Verkleidungselementes wieder gelöst werden kann.

Diese Aufgabe wird, wie beschrieben in Anspruch 1, erfindungsgemäß dadurch gelöst, dass in mindestens einem der Falze eine Aussparung vorgesehen ist, in die ein an der Verschlussklammer ausgebildetes Verriegelungselement einrückbar ist.

Dadurch, dass das Verriegelungselement an der Verschlussklammer ausgebildet ist, ist zum Verriegeln und Lösen derselben nur eine Manipulation an der Verschlussklammer, nicht dagegen an dem Verkleidungselement selber erforderlich. Dadurch wird die Gefahr vermieden, dass beim Öffnen und Schließen des ringförmigen Verkleidungselementes dieses beschädigt wird.

Vorzugsweise besteht die Verschlussklammer aus Metall, wobei das Verriegelungselemerit als verbiegbare Zunge ausgebildet ist. Dadurch kann die Zunge durch einfaches Verbiegen in die Aussparung im Falz eingerückt bzw. aus dieser ausgerückt werden. Beispielsweise kann die Zunge am Ende eines C-Schenkels der Verschlussklammer ausgebildet sein.

Im allgemeinen wird das Verkleidungselement aus Stahl, beispielsweise V2A-Stahl bestehen, wobei die Verschlussklammer in diesem Falle vorzugsweise aus einem Gleitwerkstoff, beispielsweise einer Kupferlegierung besteht.

Um eine Verschiebung der Verkleidungselemente relativ zueinander zu ermöglichen, ohne die Außenflächen der Verkleidungselemente zu verkratzen, sind zweckmäßigerweise an der Innenseite jedes Verkleidungselements Gleitelemente angeordnet, die zur Anlage an der Außenseite des jeweiligen inneren Verkleidungselementes bestimmt sind.

Die folgende Beschreibung erläutert in Verbindung mit den beigefügten Zeichnungen die Erfindung anhand eines Ausführungsbeispieles. Es zeigen:
- Fig.1: eine schematische Gesamtansicht einer Säulenverkleidung,
- Fig.2: ein einzelnes Verkleidungselement in vergrößerter perspektivischer Darstellung,
- Fig.3: eine vergrößerte Darstellung des Verschlussbereichs eines Verkleidungselementes beim Aufschieben bzw. Abziehen einer Verschlussklammer,
- Fig.4: eine der Fig.3 entsprechende Ansicht mit einer vollständig aufgeschobenen Verschlussklammer,
- Fig. 5: eine vergrößerte Darstellung des Verschlussbereiches eines Verkleidungselementes mit einem in die Aussparung des Falzes eingerückten Verriegelungselement und
- Fig.6: eine der Fig.4 entsprechende Darstellung eines herkömmlichen Verkleidungselementes.

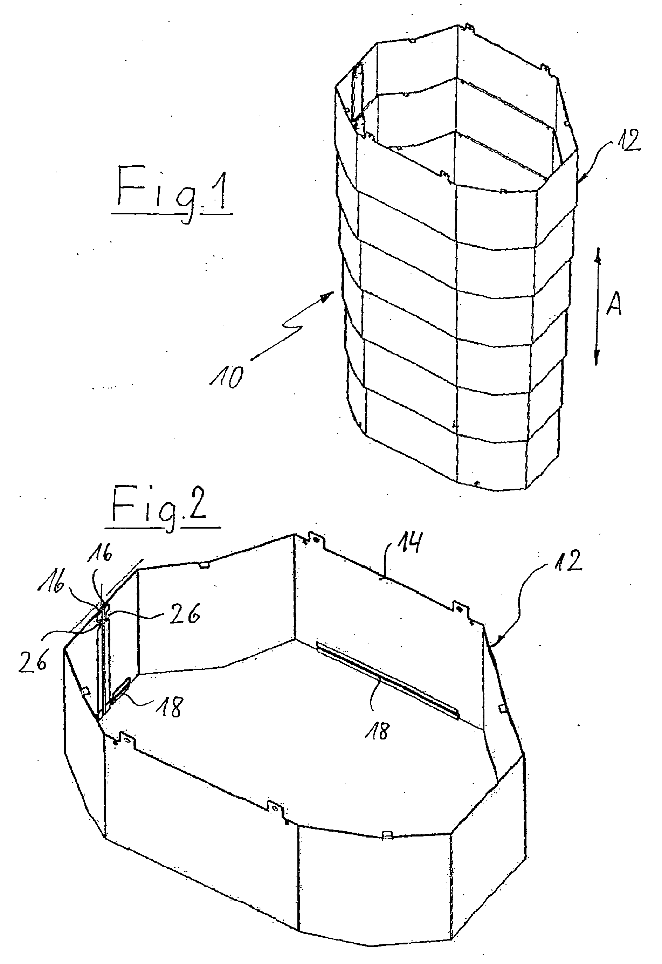

In Fig.1 erkennt man eine allgemein mit 10 bezeichnete Verkleidung für eine nicht dargestellte höhenverstellbare Stützsäule eines Operationstisches. Die Verkleidung 10 besteht aus einer Mehrzahl von ringförmigen Verkleidungselementen 12, die teleskopförmig ineinandergreifen, so dass sie in Richtung des Doppelpfeiles A, d.h. in Verstellrichtung der von der Verkleidung 10 umgebenen Stützsäule zusammengeschoben bzw. auseinandergezogen werden können.

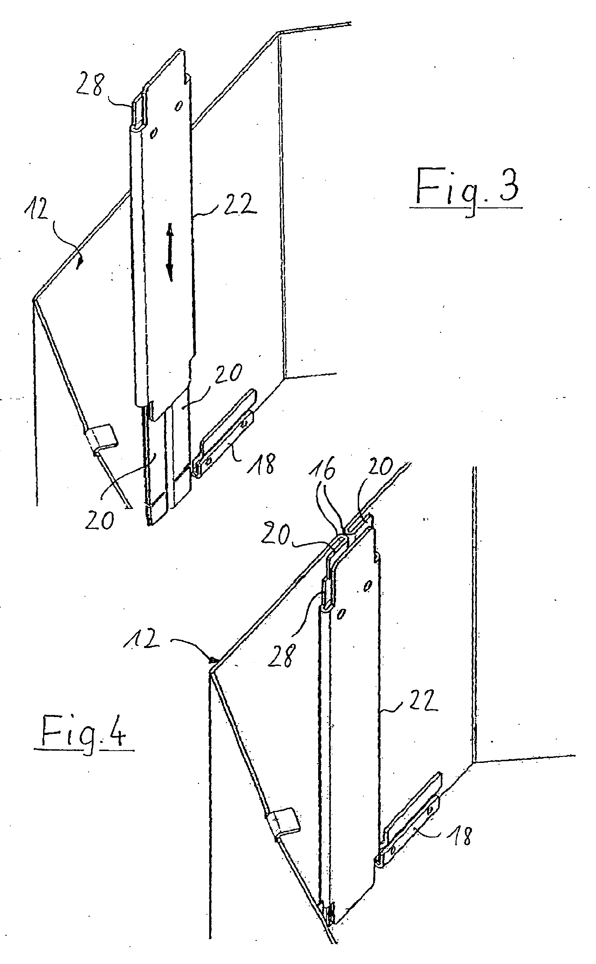

Ein einzelnes Verkleidungselement 12 ist in Fig.2 dargestellt. Es besteht aus einem Materialband 14, das in der Regel aus Stahl, beispielsweise V2A-Stahl besteht und zu einem Ring gebogen ist, dessen Längsenden 16 aneinanderstoßen und durch eine in den Fig.3 bis 5 dargestellte Verschlussklammer miteinander verbunden werden können. An der Innenseite des jeweiligen Verkleidungselementes 12 sind Gleitelemente 18 angeordnet, die zur Anlage an der Außenseite des in das jeweilige Verkleidungselement eingreifenden benachbarten Verkleidungselementes bestimmt sind, um ein Verkratzen der Außenfläche desselben zu verhindern. Eine teleskopische Verkleidung entsprechend Fig. 1 ist an sich bekannt und braucht daher nicht näher erläutert zu werden.

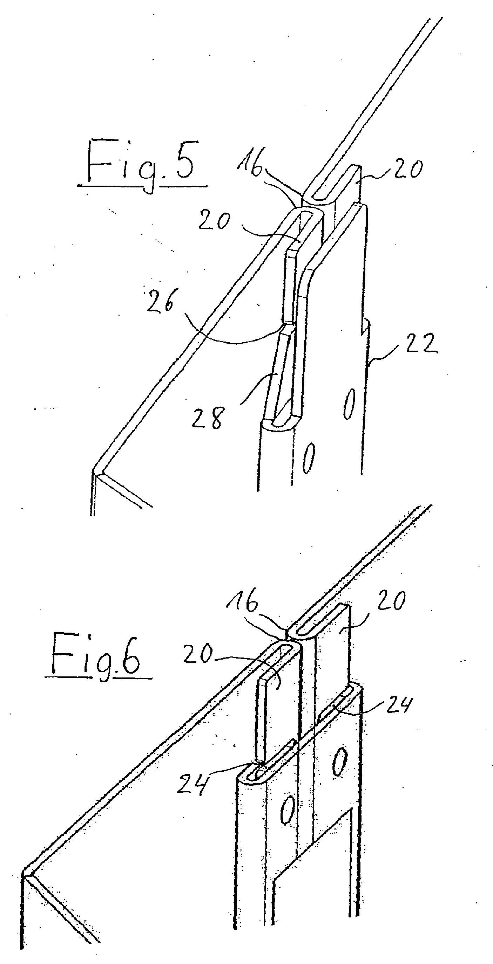

Fig.6 zeigt, wie die Enden 16 des Materialbandes 14 bei den bisher bekannten Verkleidungselementen 12 miteinander verbunden wurden. An den einander zugewandten Enden oder Rändern 16 des Materialbandes 14 ist dieses unter Bildung eines Falzes 20 nach rückwärts umgebogen, so dass die Falze 20 parallel zur Wand des Verkleidungselementes 12 gerichtet sind. Über diese Falze ist eine im Profil C-förmige Verschlussklammer 22 geschoben. Nahe den Längsenden der Falze 20 sind in diesen quer zu ihrer Längsrichtung verlaufende Schlitze 24 vorgesehen. Die durch die Schlitze 24 gebildeten Lappen können nach dem Aufschieben der Verschlussklammer 22 (Fig.6) in Richtung auf die Wand des Verkleidungselementes 12 gebogen werden, indem der Falz 20 an dieser Stelle beispielsweise mit einer Zange zusammengebogen wird. Dadurch ist die Verschlussklammer 22 in ihrer in Fig.6 dargestellten Stellung arretiert. Um die Verschlussklammer 22 wieder abziehen und das Verkleidungselement 12 öffnen zu können, müssen die Lappen wieder von der Wand des Verkleidungselementes 12 in die in der Fig.6 dargestellte Stellung gebogen werden. Sowohl beim Andrücken als auch beim Wegbiegen der Lappen besteht die Gefahr, dass das Verkleidungselement 12 an seiner Außenseite beschädigt wird. Zudem müssen die Lappen wieder exakt mit dem restlichen Flansch 20 fluchten, damit die Verschlussklammer 22 problemlos abgezogen werden kann.

Um die vorstehend genannten Nachteile bei der bekannten Lösung zu beseitigen, ist nahe dem oberen Ende des jeweiligen Falzes 20 in diesem eine Aussparung 26 (Fig.2 und 5) vorgesehen, in die nach dem Aufschieben der Verschlussklammer in die in der Fig.4 dargestellte Stellung eine an einem C-Schenkel der Verschlussklammer 22 ausgebildete Zunge 28 eingerückt werden kann, wie dies in Fig.5 dargestellt ist, so dass ein Herausziehen der Verschlussklammer 22 verhindert wird. Da die Verschlussklammer vorzugsweise aus einer Kupferlegierung besteht, kann die Zunge 28 auf einfache Weise, ggf. auch mehrfach in die Aussparung 26 hinein oder aus dieser heraus gebogen werden. In jedem Falle wird dabei lediglich die Verschlussklammer verformt, nicht dagegen das Materialband 14 des Verkleidungselementes 12.

An ihrem unteren Ende können die Falze 20 auf eine geeignete Weise verformt werden, um ein Abziehen der Verschlussklammer 22 nach unten zu verhindern. Dies kann auf eine bleibende Weise erfolgen, da es für das Öffnen der Verkleidungselemente genügt, die Verschlussklammer 22 nach einer Seite abziehen zu können.

Bei der vorstehenden Ausführungsform wurde das Verriegelungselement an der Verschlussklammer als ein- bzw. ausbiegbare Zunge dargestellt. Es besteht natürlich auch die Möglichkeit, es als federndes Rastelement auszubilden, das selbsttätig in die Aussparung 26 einrastet und gegen die Federvorspannung aus dieser wieder ausgelenkt werden kann.

## Patentansprüche

1. Verkleidung einer höhenverstellbaren Stützsäule mit einer Mehrzahl von Verkleidungselementen (12), welche die Stützsäule ringförmig umgeben und teleskopförmig ineinandergreifend relativ zueinander in Achsrichtung der Stützsäule verschiebbar sind, wobei die Verkleidungselemente (12) jeweils aus einem zu einem Ring gebogenen Materialband (14) bestehen, dessen aneinandergrenzende Ränder (16) jeweils einen rückwärts gebogenen Falz (20) haben und durch eine im Profil C-förmige, die Falze umgreifende Verschlussklammer (22) miteinander verbunden sind, **dadurch gekennzeichnet, dass** in mindestens einem der Falze (20) eine Aussparung (26) vorgesehen ist, in die ein an der Verschlussklammer (22) ausgebildetes Verriegelungselement (28) einrückbar ist.

2. Verkleidung nach Anspruch 1, **dadurch gekennzeichnet, dass** die Verschlussklammer (22) aus Metall besteht und dass das Verriegelungselement (28) als verbiegbare Zunge ausgebildet ist.

3. Verkleidung nach Anspruch 2, **dadurch gekennzeichnet, dass** die Zunge (28) am Ende eines C-Schenkels der Verschlussklammer (22) ausgebildet ist.

4. Verkleidung nach Anspruch 2 oder 3, **dadurch gekennzeichnet, dass** das Verkleidungselement (12) aus Stahl und die Verschlussklammer (22) aus einem Gleitwerkstoff besteht.

5. Verkleidung nach Anspruch 4, **dadurch gekennzeichnet, dass** die Verschlussklammer (22) aus einer Kupferlegierung besteht.

6. Verkleidung nach einem der Ansprüche 1 bis 5, **dadurch gekennzeichnet, dass** an der Innenseite der Verkleidungselemente (12) jeweils Gleitelemente (18) angeordnet sind, die zur Anlage an der Außenseite des jeweiligen inneren Verkleidungselementes (12) bestimmt sind.

## Claims

1. An encasement of a height-adjustable support column comprising a plurality of encasement elements (12) which are arranged annularly around the support column and which engage each other in a telescopic manner and can be slid relatively to each other in the axial direction of the support column, wherein the encasement elements (12) each consist of a material band (14) bent into a ring whose abutting edges (16) each have a rebate (20) bent backwards and are connected to each other by means of a retainer clip (22) having a C-shaped profile and clasping the rebates, **characterized in that** in at least one of the rebates (20) a recess (26) is provided into which recess a locking element (28) provided on the retainer clip (22) can be engaged.

2. The encasement according to clam 1, **characterized in that** the retainer clip (22) is made of metal and **in that** the locking element (28) is formed as a flexible tongue.

3. The encasement according to claim 2, **characterized in that** the tongue (28) is formed on the end of a C-leg of the retainer clip (22).

4. The encasement according to claim 2 or 3, **characterized in that** the encasement element (12) is made of steel and the retainer clip (22) is made of a slideable material.

5. The encasement according to claim 4, **characterized in that** the retainer clip (22) is made of a copper alloy.

6. The encasement according to one of claims 1 to 5, **characterized in that** the inner surface of each encasement element (12) is provided with a slide element (18) intended to abut against the outer surface of the respective internal encasement element (12).

## Revendications

1. Habillage d'une colonne de soutien réglable en hauteur, ledit habillage comportant une pluralité d'éléments d'habillage (12), lesquels entoure la colonne de soutien annulairement et sont aptes à coulisser l'un dans l'autre de façon télescopique et l'un par rapport à l'autre dans la direction axiale de la colonne de soutien, les éléments d'habillage (12) étant chacun constitués d'une bande de matière (14) qui est repliée de façon à former un anneau et dont les bords adjacents (16) possèdent chacun un repli (20) replié vers l'arrière et sont reliés entre eux par une agrafe de fermeture (22) dont le profil a une forme de C et qui entoure les replis, **caractérisé en ce que** dans au moins un des replis (20) il est prévu un évidement (26) dans lequel peut être introduit un élément de verrouillage (28) conformé au niveau de l'agrafe de fermeture (22).

2. Habillage selon la revendication 1, **caractérisé en ce que** les agrafes de fermeture (22) sont en métal et **en ce que** les éléments de verrouillage (28) sont conformés en lame pliable.

3. Habillage selon la revendication 2, **caractérisé en ce que** la lame (28) est conformée à l'extrémité d'une branche du C de l'agrafe de fermeture (22).

4. Habillage selon la revendication 2 ou 3, **caractérisé en ce que** l'élément d'habillage (12) est en acier et l'agrafe de fermeture (22) est en une matière favorisant le glissement.

5. Habillage selon la revendication 4, **caractérisée en ce que** l'agrafe de fermeture (22) est en un alliage de cuivre.

6. Habillage selon l'une des revendications 1 à 5, **caractérisé en ce que** du côté intérieur des éléments d'habillage (12) sont à chaque fois disposés des éléments de glissement (18) qui sont destinés à venir s'appuyer sur le côté extérieur de l'élément d'habillage intérieur correspondant (12).
